Europäisches Patentamt

**European Patent Office**

Office européen des brevets

(11) Publication number: **0 089 072**
**A1**

## (12) EUROPEAN PATENT APPLICATION

(21) Application number: **83200206.7**

(22) Date of filing: **10.02.83**

(51) Int. Cl.³: **G 09 B 29/00**

(30) Priority: **18.02.82 NL 8200635**

(43) Date of publication of application:
**21.09.83 Bulletin 83/38**

(84) Designated Contracting States:
**AT BE CH DE FR GB IT LI LU NL SE**

(71) Applicant: **Antillean Software Inc.**
**Pietermaai 16a**
**Curaçao Dutch Antilles(NL)**

(72) Inventor: **Ketter, Theodorus Jacobus**
**Lodewyk van Deyssellaan 162**
**NL-2024 AA Haarlem(NL)**

(74) Representative: **Lobatto, Jacob Louis, Drs.**
**Octrooi- en Merkenbureau Lobatto Postbus 1017**
**Pastoor Busslaan 40**
**NL-2242 RL Wassenaar(NL)**

(54) Combination of a board and accessory laths and method for use thereof.

(57) A combination of a board and accessory laths as well as a method for use thereof are provided.

The board (1) comprises a number of columns (3) and lines (2) and the number of accessory laths (10) is at least equal to the number of columns (3) which represent tasks to be complied with. Appropriate attachment means (4) are provided for at least one of board and laths. The combination can be used as a means for more efficient use of a planning board and also as an independent game. In its use the board and accessory laths may alternatively be handled mechanically, electrically or electronically, in the latter two instances the board and laths being replaced by their electronical complements, to wit a screen and lines on that screen respectively.

./...

FIG. 1a

FIG. 1b

0089072

## Combination of a board and accessory laths and method for use thereof

The invention relates to a combination of a board and accessory laths and method for use thereof.

Various types of planning boards are known and some of these are available in the market.They are intended for making up intended schemes and time-tables.Generally speaking this amounts to combining a number of tasks with a large number of executive units for a particular period of time.With the available planning boards the drafting of the schemes or time-tables is usually carried out by a trial and error method, as in particular for combinations of a large number of tasks with an even larger number of units, a systematic approach is not feasible in practice. These planning boards, hereinafter referred to as notation boards, are used for various purposes, such as drafting of time-tables for schools, time-tables for offices and factories, test-schemes, projects, therapy, room occupancy in hotels, distribution of mass products, shipping lines, maintenance, freighting, survey of stock, production and shift work.

The invention allows to obtain a suitable solution in a relatively short time, even for intricated problems, by a systematic processing of data.Generally stated the invention allows to add at least one unit out of a group of executive units to every task of a group of tasks, those units being intended for fulfilling such a task.In this respect the invention provides a combination of at least a board and accessory laths, hereinafter referred to as a notion board.This combination allows systematic processing of the data.The results obtained may, if desired, be transferred to a notation board.In the latter respect the notion board will function as an auxiliary unit or supplementary unit of the notation board.The invention allows an improved efficiency and an improved manoeuvrability, allowing the processing of data not only manually, as illustrated herein, but also by the obvious mechanical, electrical and electronical equivalents thereof, as referred to hereinafter.

The invention provides a combination of a board and a number of accessory laths, the board being subdivided into columns and lines and the number of accessory laths usually being larger than the number of lines on the board, with two of the laths comprising all tasks to be performed with detailed information and one task per column, and the remainder of the laths comprising detailed information of one executive unit for performing at least one of the tasks.The board of the combination is not restricted to a particular shape or dimension.For practical considerations a square or rectangular board is preferred.As mentioned above, this board may, if desired, be part of a notation board.The board may consist of an arbitraty material or a combination of materials. The working surface of the board may be flat or be provided with free spaces, protrusions as well as combinations thereof.An example of suitable protrusions are pins.If desired, the surface of the board may be formed at least in part by self-adhesive tape, magnetic material and the like; preferably only the margins on both sides, i.e. at the left hand side and at the right hand side of the board, are thus prodided.The board is subdivided into lines of equal height, and columns, not all of which have to be of equal width. These will, in combination, subdivide the board into fields which are rectangular or square in shape.At least a part of the board is a rectangle or square, further referred to as the working rectangle, which is subdivided into fields in the manner described above, of which one field per column and per line may be named or marked, which is referred to hereinafter as marked field.Any marking may be effected by for example shading or colouring.These marked fields are preferably located on a diagonal of the working rectangle. It should be observed that the references to lines and columns are mutually interchangeable.

The laths are at most of equal height as the height of a line, whereas the length of the laths is at least equal to the length of a line on the board.Usually all laths are of equal length and at least of the same length as the lines on the board.The laths may have various embodiments, such as a flat material or a rail, with attachment means for accepting data to be processed, or provided with grooves, rising rims, magnets and the like, which serve to position the data to be processed therein or to attach them thereon. Each lath is subdivided into rectangles and squares by suitable markings, such as lines or free spaces, corresponding to the rectangles and squares of each line of the notion board; they are referred to hereinafter as lath-fields.A number of these lath-fields comprise data to be processed attributed thereon, therein or thereto in any suitable manner.In so far as the data of a lath-field of data comprising laths corresponds with a field of the working rectangle, these fields are referred to as working fields of the laths.The positioning of a lath on the board should be carried out in such a manner that a working field of the lath coincides, i.e. overlaps or covers, a marked field of the notion board.Every lath may be provided at both ends with means for attaching the lath to the notion board.Alternatively the attachment means may be connected to, in or at the board.The laths may be placed onto the notion board or be attached thereto with customary means for that purpose, such as pins, burls, buttons, self-adhesive tape, magnets, grooves and the like, adjusted to the lay-out of the notion board.The number of laths is usually larger than the number of lines on the notion board, to be filled out.The data present on the laths now provide the possibility to obtain a survey of possible combinations within a short period of time, as will be discussed more fully hereinafter.As every unit can fulfil only one task per chosen step (e.g. a period of time), the said combination of unit to task is achieved by making a working field of a lath, relating to that unit, coincide with, i.e. overlap or cover, a marked field of the notice board.A step is completed when a predetermined number of marked fields has been covered by working fields.

The notice board can be an independent board, or it may form part of a notation board.As soon as a single step has been completed, i.e. that a unit has been attributed to every task to be complied with, the results thus obtained from the working fields on the laths, which cover marked fields, may be transferred to a notation board.In so far as physical symbols are used, such as burls, sticks or flags, these latter may be transferred to the notation board, and after completion of this second step the data are again transferred to the notation board in the manner as described above.This sequence is subsequently repeated until all desired or required steps have been completed and thus a complete scheme or time-table has been formed on the notation board.The notion board and the accessory laths can be manufactured in an embodiment adapted to any type of notation board, thus allowing extension, improvement and also systematic use of a notation board.As notion board with its marked fields as described above may also be used a screen for visualising data, wherein the cursor represents a working field of a lath, said lath in this case represented as a line, attributing this working field to a marked field of the board, in this case represented by the screen.

The combination of board and accessory laths can also be used for games.Though on the face of it these games are rather sophisticated and thus aimed at more advanced age groups, it is also possible to make simpler versions for the younger ones, if desired with educational purposes.

The invention also relates to a method for use of a combination of board and accessory laths, as set out above, wherein the laths are attributed one by one to the columns according to the principle of highest resistance until the desired number of marked fields has been provided with a working field, i.e. the completion  of one step. During the execution of such a step ate least two mutually exchangeable laths, including those laths which have not yet been placed on the board, may be interchanged. The above method can be repeated until the scheme or time-table has been completed. It will be understood from the above that interchanging a lath on the board with a lath outside the board will amount to a replacement of the former. If such a replaced lath is placed in another position on the board, this amounts to a displacement. As mentioned above, a modification of this method is carried out automatically instead of manually, such as on a mechanical, electrical or electronical basis, without deviating from the gist of the invention.

The invention will be further elucidated at the hand of the accompanying drawings, without limiting the invention to the embodiment shown.

In the accompanying drawings:
Fig.1a represents a top view of a notion board according to the invention,
Fig.1b represents a top view of an embodiment of the laths according to the invention, and
Fig.2 represents a top view of a notion board with laths positioned thereon.

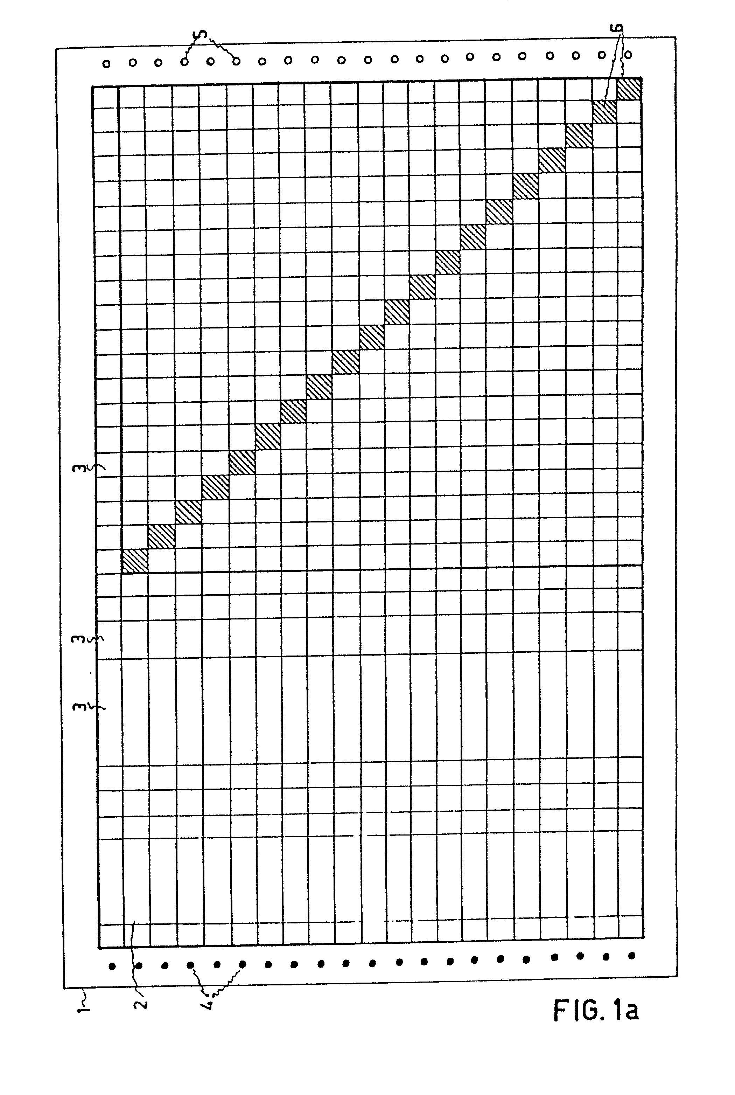

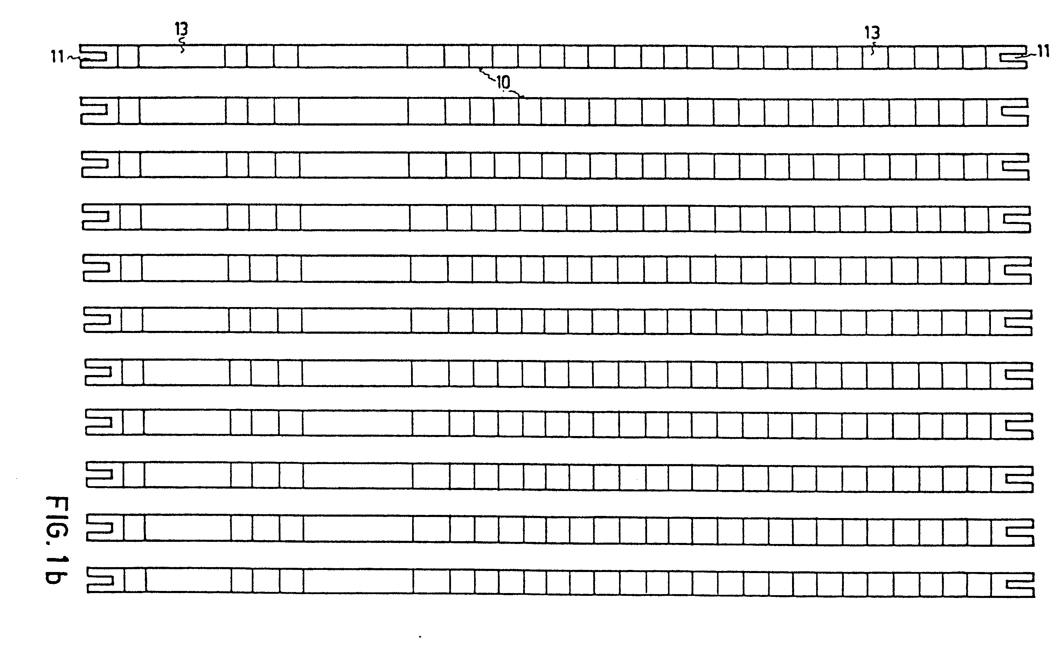

In Fig.1a an embodiment of the notion board according to the invention is board 1, subdivided in lines 2 and columns 3. At one side of board 1 are fixed pins 4 and at the other side holes 5 (in which fit loose pins 12, not shown), as attachment possibilities for the laths to the board. On board 1 is located a working square with marked fields positioned on a diagonal (shaded for easy recognition), thus providing diagonal fields 6.

In Fig.1b is represented an embodiment of the laths according to the invention, wherein the laths 10 are provided at both ends with free spaces 11, which fit around the pins 4 of Fig.1a and around loose pins 12, which fit into holes 5, and which are provided with a subdivision into columns 13, corresponding with the subdivision into columns of the board. The fields formed on the laths by the subdivision into columns are referred to as lath-fields. The data to be processed are attributed to or into the lath-fields.

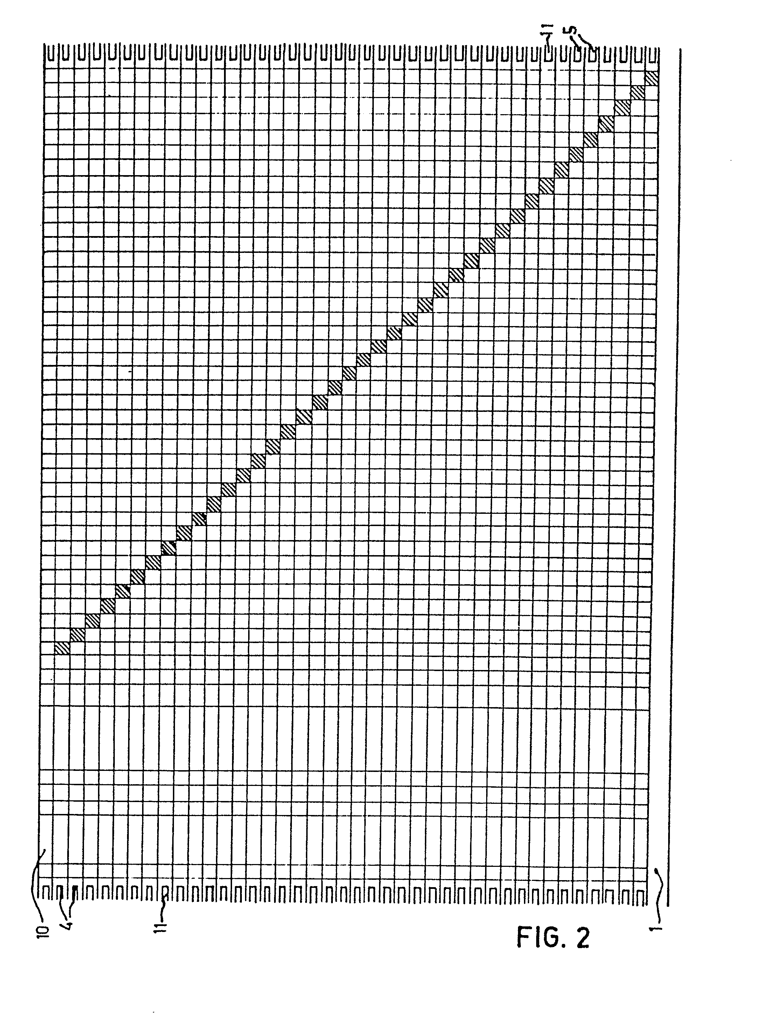

In Fig.2 the laths 10 have been positioned onto the board 1 with pins 4 fitting into free spaces 11 and pins 12 fitting into free spaces 11 and into holes 5.

The method for use of the combination of board and accessory laths will now be described by way of example for the intricated problem of drawing up a time-table for an institute with a relatively large number of instruction groups or classes, and a still larger number of instructors. This example has been chosen as to the best of our knowledge it is the most intricated of all intricated problems. It may possibly be approached in its complexity by a shift-work schedule for continuous industry, where attention has to be paid to the individual desires of the members of every shift with respect to holidays, possible extra days off and other times off. The notion board may also be used for the solution of simulated problems as a recreational activity or game for a plurality of players or as solitaire.

EXAMPLE

A board according to Fig.1a, but with a subdivision in accordance with Fig.2, is used with 40 columns and 40 lines as a working rectangle, as well as 9 columns for data, which are positioned at the left hand side of the working rectangle.In addition 67 laths with a corresponding subdivision into columns are used.Onto two of these laths are attributed the indications of every column in an identical manner; in the prevailing case these are number, name and abbreviation respectively of the instructor, as well as an abbreviation of the lectures to be given by this instructor, number of own classrooms, or Z (changing classrooms), particulars, total number of available hours, number of classes to be instructed by the instructor, number of spare hours, 19 class columns and one column S for branch section meetings.One of these two laths is placed at the top on the board, and the other one is placed next to the board with the remaining 65 laths with all columns lined out underneath the corresponding columns of the top lath.The remaining laths comprise all variable data on labels, on which the number of hours was indicated as a figure.By use of the top lath, comprising all column references, these data can be introduced into the correct column of each lath.Though various starting points may be used, the procedure in the present case is as follows.The 65 laths are arranged under the top lath with column indications in a sequence of diminishing number of spare hours, as shown in the relevant column.A table is made of all days for all classes or groups and the number of instructors, assigned to every class or group, which are not available for a specific hour, is included in that table.In order to determine the starting point for the first step, attention is paid to the resistances, which have to be overcome, and from which combined information emerges the day or hour respectively with the highest resistance, and son on for all further steps.In every step the laths are laid down according to this principle of overcoming the highest resistance.In the present case a number of main factors occur as resistances, which do not necessarily occur in all instances, while in addtion thereto still other hampering factors may play a part, but these latter are usually less stringent.The main resistances are caused by the number of instructors available in a particular situation, the smaller this number the higher the resistance; the number of instructors available for a plurality of tasks, the smaller this number the higher is the resistance; availability of other instructors to replace instructors available for a plurality of tasks, the smaller this number the higher is the resistance; mutual coupling of identical instruction in the same period of time, for example to parallel classes or instruction in various subjects at the same time to groups originating from various classes, the more coupling, the higher is the resistance; the availability of rooms, rooms for specific subjects causing a higher resistance; in addition the resistances caused by the facts that the instruction for every subject should be evenly distributed over the week per class or group, that a particular type of subject should not occur more than once a day per class or group, as well as a possible necessity to use a plurality of different buildings and the spreading of such buildings, the resistance increasing with increasing number of buildings and increasing mutual distances of the buildings.In every step the principle of highest resistance is also at the bais of every action.In the positioning of the laths on the board resistances are a.o.: the number of spare hours of an instructor, and the number of classes the instructor may serve.The smaller the number of spare hours, the higher is the resistance, and the same applies for the said number of classes.The situation(s) which in the total of these determination factors turn out to be most unfavourable, i.e. which show the highest combined resistance, are suitable as a starting position.Thus the day with the highest resistance may be elected as starting day and of that day the hour with the smallest number of available and useful instructors.Once that hour has been elected, all laths of instructors not available for that hour are removed from the 65 laths next to the notion board.From the laths that are left in play it can easily be seen for which class or groups the smallest number of instructors is available.From this latter group the lath of the instructor with the smallest number of spare hours is positioned on the notion board in such a way that the working field covers the relevant marked field in the column of the relevant class or group.According to this same principle an instructor is assigned to all other classes or groups until all desired diagonal fields are covered.If desired laths already positioned on the board may be interchanged or displaced in order to allow positioning of a lath which could not be placed in the original situation, or may be removed from the board.The results thus obtained on a diagonal are transferred to the notation board.For that specific hour every class or group has then been provided with an instructor.After this transfer of the data to the notation board, the spare numbers in the spare column on the laths of the available instructors, which have not been used on the board, are diminished by one.The first step has then been completed.

As subsequent step the preceeding and following hour of that particular day were filled out in the above manner, starting with the preceeding hour.In this example we started with the fourth hour of the Friday, with the third hour as the next step and the fifth hour as the subsequent step.For that purpose all laths were again positioned next to the notion board under the top lath in sequence of diminishing number of spare hours.In order to avoid intermediate of hours for the instructors as much as possible, the instructors which have been assigned to the fourth hour are used as much as possible also for the third and fifth hour.However, it should be avoided that a class or group will have the same subject twice on the same day. Again all instructors not available for the relevant hour are removed from the group of laths next to the notion board, whereafter the notion board is filled out with laths in the same manner as described for the first step, until an instructor has been assigned to every class or group envisaged.After completion of the second step, in this case the third hour, the spare numbers in the spare columns of the laths of the instructors which have not been used on the board during this step for the final arrangement, are again diminished by one.Also the number of hours to be given by the relevant instructor for the class to which he has been assigned, is then diminished by one, just like in the first step.After completion of the second step, the third step, in this case the fifth hour, is completed, again in a similar manner as described above.The time-table for the complete day was then completed by assigning instructors to classes or groups for the still outstanding hours, always according to the above principle.After completion of the time-table foor the Friday, possible off hours between instruction hours for the individual instructors may be removed by mutual interchanges or by introducing instead instructors which had until then been left outide the scheme.The result of one step is represented in Fig.2. In the manner described above it is possible to see to it, that every instructor has no more than one odd hour per every ten hours and/or part thereof.Subsequently the remaining days can be filled out in the same way and according to the same principle, whereupon the time-table for a complete week is finished.By manipulating laths by interchange or by replacement by another available lath it will be possible to arrange for half a day or a full day off for one or more of the instructors.

Alternatively, instead of a day by day construction of the time-table, it is also possible first to make provisions for the cantral part of each day, i.e. the third, fourth and fifth hour, again according to the principle of highest resistance, thus making it easier to employ instructors, which have been employed for the central hours of a particular day also for the other hours of said day, thus avoiding undesired intermediate hours. In so fas as instructors are not available for particular hours of one or more days, either because they are employed at another institute at that time, or for personal reasons, this can easily be indicated on the laths, thus allowing to take into account these desires when drafting the scheme. Other desirabilities such as the simultaneous availability of all instructors of a branch section, can thus be taken into account as well.

From the above it will be clear, that by introducing an executive unit instead of an instructor, by replacing a class or group by a task, by replacing an instruction hour by a specific period, and so far as applicable a classroom by a place, similar problems of high complexity can be brought ot a satisfactory solution within a relatively short time, even when a substantial number of desires have to be taken into account.

Many variations of the above will be obvious to the expert without departing from the essence of this invention.

Claims:

1. Combination of a board and accessory laths, the board being subdivided into columns and lines and the number of accessory laths being at least equal to the number of lines to be served on the board, with two laths comprising all tasks to be performed with detailed information and one task per column, and the remainder of the laths comprising detailed information of one executive unit for performing at least one of these tasks.

2. A combination according to claim 1, wherein the board is provided with attachment means for the laths.

3. A combination according to claim 1 or 2, wherein at least one lath is provided with attachment means for the board.

4. A combination according to any one of the preceeding claims, wherein all tasks have been attributed each to one column adjacent to each other and constituting a working rectangle, including a working square, together with an appropriate number of lines.

5. A combination according to claim 4, wherein in the working rectangle one of the fields formed by the respective columns and lines is a marked field.

6. A combination according to claim 5, wherein the marked fields are positioned on a diagonal of the working rectangle.

7. A combination according to any one of the preceeding claims, wherein each one of the remainder of the laths is provided with a subdivision into columns, corresponding to that of the board, with at least one column of the columns on the lath coinciding with the working rectangle being attributed with at least one task.

8. A combination according to claim 7, wherein a lath, positioned on the board, is positioned in such a way, that a column comprising a task, i.e. a working field, coincides with a marked field.

9. A combination according to any one of the preceeding claims, wherein the board is part of a planning board.

10. A method for use of a combination of a board and accessory laths, the board being subdivided into columns and lines and the number of accessory laths being at least equal to the number of lines to be served on the board, with two laths comprising all tasks to be performed and one task per column, and the remainder of the laths comprising detailed information of one executive unit for performing at least one of these tasks, wherein the laths are attributed one by one to the columns according to the principle of highest resistance until the desired number of marked fields has been provided with a working field, thus completing one full step.

11. A method according to claim 10, wherein at least two mutually interchangeable laths are interchanged.

12. A method according to claim 11, wherein a lath on the board is removed from the board and is replaced by a lath from outside the board.

13. A method according to claim 11, wherein a lath on the board is shifted and is replaced by another lath in its original position.

14. A method according to any one of claims 10-13, wherein the full step is repeated until the total system of tasks to be served has been completed.

15.  A method according to any one of claims 10-14, wherein ate least one step is carried out automatically.

16.  A method according to claim 14, wherein the repetition of steps is carried out automatically.

17.  A method according to claim 15, wherein the method is carried out mechanically, electrically or electronically.

18.  A method according to claim 16, wherein the method is carried out mechanically, electrically or electronically.

FIG. 1a

FIG. 1b

FIG. 2

# EUROPEAN SEARCH REPORT

European Patent Office

**0089072**
Application number

EP 83 20 0206

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| P,A | DE-A-3 045 376 (P. SIEPERMANN)<br><br>* Page 5, lines 11-25; claim 7 *<br><br>--- | 1-4,9,<br>11-13 | G 09 B 29/00 |
| A | GB-A-2 066 546 (D. ALBERT)<br><br>* Whole document *<br><br>--- | 2,3,9,<br>15-18 | |
| A | AT-B- 215 336 (SCANPUBLIC<br>V/DAISY BRUUN)<br>* Whole document *<br><br>----- | 4-6 | |
| | | | **TECHNICAL FIELDS SEARCHED (Int. Cl. 3)**<br><br>A 63 B 71/06<br>G 09 B 29/00<br>G 09 F 7/00 |

The present search report has been drawn up for all claims

| Place of search<br>BERLIN | Date of completion of the search<br>13-04-1983 | Examiner<br>BOTTERILL K.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82